# EUROPÄISCHE PATENTSCHRIFT

(11) **EP 4 185 850 B1**
(45) Veröffentlichungstag und Bekanntmachung des Hinweises auf die Patenterteilung: **24.09.2025**
(21) Anmeldenummer: 21749126.5
(22) Anmeldetag: 15.07.2021
(51) Int. Cl.: G01L 1/22, G01L 5/00, G01L 5/22, G01L 1/26, G01B 7/16

(54) **MESSEINRICHTUNG ZUR ANORDNUNG IN EINEM ZYLINDERFÖRMIGEN INNENRAUMABSCHNITT EINES HOHLKÖRPERS**
MEASURING DEVICE FOR ARRANGING IN A CYLINDRICAL INTERIOR SECTION OF A HOLLOW BODY
DISPOSITIF DE MESURE DESTINÉ À ÊTRE DISPOSÉ DANS UNE SECTION INTÉRIEURE CYLINDRIQUE D'UN CORPS CREUX

(30) Priorität: 24.07.2020 DE 102020119655
(43) Veröffentlichungstag der Anmeldung: 31.05.2023
(73) Patentinhaber: core sensing GmbH, 64287 Darmstadt (DE)
(72) Erfinder: KRECH, Martin, 64367 Mühltal (DE)
(74) Vertreter: Habermann Intellectual Property Partnerschaft von Patentanwälten mbB
(86) Internationale Anmeldenummer: PCT/EP2021/069849
(87) Internationale Veröffentlichungsnummer: WO 2022/017928

(56) Entgegenhaltungen:
- DE-A1- 102010 027 959
- US-A- 3 861 203
- US-A- 5 402 689
- US-A1- 2008 184 818

## Beschreibung

Die Erfindung betrifft eine Messeinrichtung zur Erfassung einer mechanischen Beanspruchung eines Hohlkörpers mit einem zylinderförmigen Innenraumabschnitt, wobei die Messeinrichtung einen in dem zylinderförmigen Innenraumabschnitt kraftübertragend festlegbaren Verformungskörper mit einem Verformungsbereich und eine Sensoreinrichtung aufweist, die in dem Verformungsbereich festgelegt ist und eine aufgrund der mechanischen Beanspruchung des Hohlkörpers auf den Verformungskörper übertragene mechanische Beanspruchung und dadurch erzwungene Verformung des Verformungsbereichs erfassen kann.

Aus der Praxis sind moderne Technologien bekannt, die beispielsweise als das Internet der Dinge oder als Industrie 4.0 bezeichnet werden und unter anderem das Ziel haben, physische Gegenstände, einzelne Maschinenkomponenten oder ganze Anlagen miteinander zu vernetzen und sie mit Hilfe von Informations- und Kommunikationstechniken automatisiert zusammenarbeiten zu lassen. Die vernetzten und zusammenarbeitenden Komponenten sollen dadurch effizienter und zielgerichteter gesteuert und überwacht werden können, wobei die Produktivität der eingesetzten Mittel erhöht werden kann. Eine notwendige Voraussetzung für einen erfolgreichen Einsatz dieser Technologien ist die Erfassung der relevanten physikalischen Messgrößen bei den einzelnen Komponenten. Auf der Grundlage dieser Messgrößen können Maschinenelemente oder Prozesse überwacht oder geregelt werden und beispielweise eine prädiktive Instandhaltung der Maschinen und Anlagen durchgeführt werden. Diese Prognosen können die aktuelle Belastung oder Auslastung der Komponente und die Funktionsfähigkeit der Maschine bzw. Anlage zum Gegenstand haben, sodass bevorstehende Ausfälle frühzeitig erkennbar sind oder mögliche Fehlerursachen in der Anlage leichter erkannt werden können. In ähnlicher Weise können die physikalischen Messgrößen aber auch dafür erfasst werden, einen Motor in Abhängigkeit einer von einem Menschen ausgeübten Beanspruchung anzusteuern, sodass beispielsweise ein handführtes, elektrisch unterstütztes Fahrzeug assistierend betrieben werden kann.

In vielen Anwendungsbereichen werden sogenannte intelligente Maschinenelemente bzw. Anlagenkomponenten benötigt, bei denen die relevanten physikalischen Messgrößen erfasst und als digitale Informationen zu einer datenverarbeitenden Einrichtung weitergeleitet werden können. Beispiele für die relevanten physikalischen Messgrößen können auf die Maschinenelemente einwirkende Kräfte, Drehmomente, Lageparameter oder auch Drehzahlen sein.

Beispielhaft für eine intelligente Komponente wird in der Druckschrift WO 2013/012870 A1 ein Drehmomentsensor beschrieben, der in einer Spindel untergebracht ist, an deren gegenüberliegenden Enden jeweils ein Kurbelarm angebracht sein kann, wobei der Drehmomentsensor die von den Kurbelarmen auf die Spindel einwirkenden Kräfte und Drehmomente mittels Dehnungsmessstreifen erfasst und in einer Elektronik verarbeitet. Die kraftschlüssige Festlegung eines Drehmomentsensors in einem zylindrischen Innenraum eines Hohlkörpers wie beispielsweise einer Tretkurbel erfordert regelmäßig eine möglichst präzise vorgegebene Passung in dem Hohlkörper, in welche der hülsenförmig ausgebildete Drehmomentsensor eingepresst werden kann. Aufgrund der üblicherweise unvermeidbaren Herstellungstoleranzen bei rohrförmigen Hohlkörpern, wie z.B. geschweißten, gezogenen oder gepressten Rohren, ist eine Formgebung einer Innenwand des Hohlkörpers nicht ausreichend präzise vorgegeben, sodass ein hülsenförmiger oder stabförmiger Sensorkörper nicht ohne weiteres in dem Innenraum des Hohlkörpers kraftschlüssig festgelegt werden kann und eine gesonderte Passung immer erforderlich ist.

Es ist beispielsweise aus US 5,402,689 A bekannt, dass ein hülsenförmiger Verformungskörper an seinen entgegengesetzten Enden jeweils axial abstehende und radial nach außen vorspringende Klemmzungen aufweist, die mit Hilfe eines einführbaren Klemmelements radial nach außen verlagert und an eine umgebende Innenwand einer zylinderförmigen Ausnehmung in einem Bauteil angepresst werden können. Für eine zuverlässige Festlegung des hülsenförmigen Verformungskörpers mit den vorspringenden Klemmzungen müssen jedoch von beiden entgegengesetzten Seiten aus jeweils ein Klemmkörper zwischen die Klemmzungen eingebracht werden können, sodass dieser Einpresssensor nur in Ausnehmungen festgelegt werden kann, die von einander gegenüberliegenden Seiten aus zugänglich sind.

Aus der Praxis sind verschiedene Anwendungsbeispiele für Einpresssensoren bekannt, bei denen eine pillenförmige Messeinrichtung formpassend bzw. formschlüssig in eine entsprechende Passung eingepresst wird, die z.B. in ein Pressengestell eingebracht wird. Die Anforderungen an die Präzision bei der Herstellung sowohl der Passung als auch der hülsenförmigen Sensorkörper, die in die Passung eingepresst werden müssen, sind hoch und verursachen entsprechend hohe Herstellungskosten. Zudem kann eine Passung nur in von außen unmittelbar zugänglichen Bereichen der Maschinenkomponente eingebracht werden, sodass eine räumliche Anordnung der Drehmomentsensoren an den Maschinenkomponenten erheblich eingeschränkt ist. So ist beispielsweise die Anordnung eines Drehmomentsensors beabstandet von den Stirnseiten in dem Innenraum eines rohrförmigen Hohlkörpers regelmäßig nicht möglich, da in dem zylinderförmigen Innenraumabschnitt keine geeignete Passung ausgebildet werden kann. Dies ist insbesondere der Fall, wenn es sich um ein geschweißtes, gezogenes oder gepresstes Rohrstück handelt, das mit den technisch möglichen Herstelltoleranzen keine ausreichende Grundgenauigkeit für eine Pressverbindung aufweist und auch eine zerspanende Weiterverarbeitung aufgrund von Rundheitsabweichungen, Wandstärkenschwankungen und Exzentrizität in dem Rohrbereich ausgeschlossen ist.

In DE 10 2015 106 933 A1 wird eine Möglichkeit beschrieben, wie ein Drehmomentsensor in dem Innenraum eines rohrförmigen Hohlkörpers angeordnet und festgelegt werden kann. Allerdings muss dazu der rohrförmige Hohlkörper mit einem speziellen Verfahren und mit geeigneten Werkzeugen hergestellt und gleichzeitig der Drehmomentsensor in dem Innenraum festgelegt werden, wodurch die Herstellung des Hohlkörpers sehr aufwendig wird. Zudem kann der Drehmomentsensor nicht an einer beliebigen Stelle innerhalb eines bereits hergestellten rohrförmigen Hohlkörpers angeordnet werden, sodass die Anordnung von Drehmomentsensoren in zertifizierten Hohlkörpern, die nach einem zertifizierten Verfahren hergestellt werden müssen, nicht möglich ist.

In US 3 861 203 A oder US 2008/0184818 A1 werden jeweils Messsensoren gezeigt und beschrieben, bei denen in einem zylinderförmigen Hohlraum eines Bauteils ein scheibenförmig ausgebildeter Verformungskörper so festgelegt werden kann, dass über den seitlichen Rand des scheibenförmigen Verformungskörpers Kräfte und Drehmomente auf den scheibenförmigen Verformungskörper übertagen und dort erfasst werden können.

Eine andere Messeinrichtung ist aus DE102010027959A1 bekannt.

Es ist daher eine Aufgabe der Erfindung eine Messeinrichtung zur Erfassung einer mechanischen Beanspruchung eines Hohlkörpers bereitzustellen, die robust und kosteneffizient in rohrförmige Hohlräume von stark toleranzbehafteten Halbzeugen bzw. Maschinenelementen platziert werden kann. Diese Aufgabe wird erfindungsgemäß dadurch gelöst, dass an zwei gegenüberliegenden Enden des Verformungskörpers jeweils ein elastisch verformbares Einpressringelement angeordnet ist und das Einpressringelement mindestens abschnittsweise eine derart geringe Ringelementstärke aufweist, sodass sich das Einpressringelement an eine Innenwandung des Hohlkörpers anpasst und kraftschlüssig an die Innenwandung angepresst wird, sodass eine mechanische Beanspruchung des Hohlkörpers über die Einpressringelemente auf den Verformungskörper übertragen wird und eine mit der Sensoreinrichtung erfassbare Verformung des Verformungsbereichs des Verformungskörpers bewirkt, wobei der Verformungsbereich des Verformungskörpers aus die beiden Einpressringelemente verbindenden Verformungsstegen besteht, an denen die Sensoreinrichtung festgelegt ist, und wobei ein Durchmesser des Verformungsbereichs geringer ist als ein Ringelementdurchmesser der Einpressringelemente. Die Ringelementstärke entspricht einem in radialer Richtung gemessenen Abstand zwischen einer radial innenliegenden Einpressringelementinnenfläche und einer radial außenliegenden Einpressringelementaußenfläche.

Die erfindungsgemäße Messeinrichtung weist einen Verformungskörper mit daran angeordneten Einpressringelementen auf, mit welchen der Verformungskörper kraftschlüssig in einem zylinderförmigen Innenraumabschnitt eines Hohlkörpers festgelegt werden kann, ohne dass dafür eine genau vorgegebene Übermaßpassung erforderlich ist. Der Verformungskörper wird mit den Einpressringelementen in den Innenraum des Hohlkörpers eingeführt und in dem gewünschten Bereich bzw. in dem vorgegebenen Innenraumabschnitt angeordnet. Dies geschieht beispielsweise durch ein stirnseitiges Einpressen mit, aber auch ohne thermisches Schrumpfen, d.h. einer zusätzlichen Temperaturanpassung der Fügepartner. Die elastisch verformbaren Einpressringelemente passen sich dabei an den Verlauf der Innenwandung des Hohlkörpers an und erzeugen einen ausreichend hohen Anpressdruck an die Innenwandung, sodass der Verformungskörper über die Einpressringelemente in dem Innenraum des Hohlkörpers kraftschlüssig festgelegt ist und eine mechanische Beanspruchung des Hohlkörpers auf den Verformungskörper der Messvorrichtung übertragen wird. Der Hohlkörper weist dabei einen zumindest näherungsweise zylinderförmigen Innenraum bzw. Hohlraum auf. Aufgrund der geringen Ringelementstärke können sich die Einpressringelemente an einen nicht ideal kreisförmigen, sondern toleranzbedingt unregelmäßigen und beispielsweise eher ovalen Umfangsverlauf der Innenwandung anpassen. Die Ringelementstärke ist dabei zweckmäßigerweise so vorgegeben, dass eine die Formgebung der Einpressringelemente verändernde Verformung und Anpassung an die umgebende Innenwandung möglich ist und gleichzeitig eine ausreichend hohe Rückstellkraft erzeugt wird, mit welcher der Anpressdruck des betreffenden Einpressringelements an die umgebende Innenwandung bewirkt wird.

Es ist vorteilhaft, wenn die Einpressringelemente bzw. der Verformungskörper aus dem gleichen Material bestehen wie der Hohlkörper, sodass Temperaturunterschiede nicht zu deutlich unterschiedlichen Ausdehnungen der Einpressringelemente und dem Hohlkörper führen und dadurch die kraftschlüssige Verbindung zwischen den Einpressringelementen und dem umgebenden Hohlkörper geschwächt oder derart beeinträchtigt wird, dass keine genaue Messung mit der Messeinrichtung mehr möglich ist.

Die nahtlose und kraftschlüssige Verbindung zwischen erfindungsgemäßer Messeinrichtung und dem Hohlkörper bewirkt, dass mechanische Kräfte, die auf den Hohlkörper wirken, von den Einpressringelementen direkt zum Verformungsbereich des Verformungskörpers weitergeleitet werden, sodass die Sensoreinrichtung die auf den Verformungsbereich einwirkenden mechanischen Kräfte über die dadurch verursachte Verformung des Verformungskörpers in dem Verformungsbereich als physikalische Messgrößen erfassen kann.

Besonders vorteilhaft kann erfindungsgemäß vorgesehen sein, dass die geringe Ringelementstärke der Einpressringelemente bezogen auf einen jeweiligen Ringelementdurchmesser der Einpressringelemente in einem Bereich von 3% bis 25% vorgegeben ist. Auf Grund der geringen Ringelementstärke weisen die Einpressringelemente ein in vorteilhafter Weise groß vorgegebenes elastisches Formänderungsvermögen auf. Während eines Einpressvorgangs können die Einpressringelemente ein elastisches Formänderungsvermögen bis zu einer Elastizitätsgrenze ausschöpfen.

Darüber hinaus können die Einpressringelementen aus einem geeigneten Material hergestellt sein, welches bei einer über die Elastizitätsgrenze hinausgehenden erzwungenen Verformung eine plastische Formänderung ermöglicht, bevor eine Beschädigung der Einpressringelemente zu befürchten ist. Aus der Praxis ist die Elastizitätsgrenze auch als Fließgrenze eines Materials bekannt. Die Einpressringelemente können ein elastisches Formänderungsvermögen bis zu einer Elastizitätsgrenze ausschöpfen, um darüber hinaus eine plastische Formänderung der Einpressringelemente zu ermöglichen. Auf diese Weise können die Einpressringelemente ein ihnen innewohnendes volles elastisches Formänderungsvermögen für einen radialen Kraftschluss ausschöpfen können, unabhängig von einer gegebenen Beschaffenheit des Innenraumabschnitts des Hohlkörpers. Durch die anschließend mögliche plastische Verformung wird eine darüber hinausgehende und noch höhere radiale Anpassbarkeit der Einpressringelemente an eine Innenwandung des Innenraumabschnitts des Hohlkörpers ermöglicht.

Formänderungen der Einpressringelemente von zusätzlich 200% bis 300% im Vergleich zu elastischen Formänderungen sind bei einer geeigneten Materialwahl ohne weiteres möglich. Die mindestens abschnittsweise reduzierte Ringelementstärke im Bereich von 3% bis 25% erlaubt vorteilhafterweise eine Anpassung der Einpressringelemente an nahezu alle praxisrelevanten rohrförmigen Hohlkörper mit einem zumindest näherungsweise zylinderförmigen Innenraumabschnitt. In Abhängigkeit von dem Anteil des einen Umfangsabschnitts oder der mehreren Umfangsabschnitte mit einer geringen Ringelementstärke relativ zu einem Gesamtumfang des Einpressringelements kann die Rückstellkraft des elastisch verformbaren Einpressringelements innerhalb eines großen Bereichs vorgegeben und dadurch individuell an den jeweiligen Hohlkörper angepasst werden. Je größer die Ringelementstärke ist, desto steifer ist das Einpressringelement und desto höher ist die Rückstellkraft der Einpressringelements und damit der Anpressdruck des Einpressringelements an die umgebende Innenwandung des Hohlkörpers. Optional kann bei einer günstigen Auslegung der Einpressringelemente so auch eine gezielte Kaltverfestigung der Einpressringelemente bewirkt werden, wenn diese radial umgeformt werden, was die mechanische Stabilität der erfindungsgemäßen Messeinrichtung in dem Hohlkörper erhöht.

Es ist für viele Anwendungsfälle vorteilhaft, dass beide Einpressringelemente denselben Ringelementdurchmesser aufweisen. Um die Messeinrichtung beispielsweise in einem konisch zulaufenden Innenraum eines Hohlkörpers festlegen zu können ist es jedoch ebenfalls denkbar, dass die beiden Einpressringelemente jeweils einen individuellen und voneinander abweichenden Ringelementdurchmesser aufweisen. Optional ist es auch möglich, dass bei einer anders gearteten Innenkontur, beispielsweise bei einem ovalen Profilquerschnitt des Hohlkörpers, die Einpressringelemente ein dem Profilquerschnitt entsprechendes Profil aufweisen.

Idealerweise ist die radiale Steifigkeit der Einpressringelemente so hoch vorgegeben, dass der erforderliche Kraftschluss über die bestimmungsgemäße Nutzungsdauer des Hohlkörpers bzw. der Messeinrichtung aufrechterhalten werden kann. Mit einem möglichst hohen Anpressdruck der Einpressringelemente gegen die Innenwandung des rohrförmigen Hohlkörpers, der jedoch eine beschädigungsfreie Einführung der Messeinrichtung in den Innenraum des Hohlkörpers zulässt, kann ein lineares Ansprechverhalten der Messeinrichtung über einen weiten Messbereich der Messeinrichtung ermöglicht werden. Dadurch kann die Auswertung der Sensorsignale der Messeinrichtung erleichtert werden und gegebenenfalls auch genauere Messergebnisse erzielt werden.

Um einen beschädigungsfreien Einpressvorgang der erfindungsgemäßen Messvorrichtung besser gewährleisten zu können, kann nach einer besonders vorteilhaften Ausgestaltung der Erfindung vorgesehen sein, dass das in die Einpressrichtung liegende Ende des Verformungskörpers mindestens eine radial zu einer Längsachse des Vorformungskörpers nach innen vorspringende Anlagefläche aufweist, sodass mit einem an der mindestens einen vorspringenden Anlagefläche anliegenden Einpresswerkzeug die Messvorrichtung in Einpressrichtung in den Innenraumabschnitt eingepresst werden kann.

Während des Einpressvorgangs müssen üblicherweise erhebliche Einpresskräfte auf die erfindungsgemäße Messvorrichtung ausgeübt werden, speziell auf den Verformungskörper und den Verformungsbereich. Die Einpresskräfte können sogar erheblich größer als die von der Sensoreinrichtung zu erfassenden und auf den Verformungsbereich einwirkenden mechanischen Beanspruchungen werden, sodass es möglich ist, dass der Verformungsbereich und die Sensoreinrichtung beim Einpressvorgang nachhaltig und für einen bestimmungsgemäßen Gebrauch nachteilig verformt oder beschädigt werden, wenn die Einpresskräfte auf das zuletzt in den Hohlkörper eidringende, der Einpressrichtung gegenüberliegende Ende des Verformungskörpers einwirken.

Mit der nach der Ausgestaltung geformten Anlagefläche, die innerhalb des Verformungskörpers liegt und radial zu dessen Längsachse vorspringt, kann an der Anlagefläche ein Einpresswerkzeug ansetzen und die Messvorrichtung bzw. den Verformungskörper an dem in Einpressrichtung liegenden Ende einpressen, sodass auf den Verformungsbereich und die Sensoreinrichtung nur reduzierte Zugkräfte und keine stauchenden Einpresskräfte wirken. Die Anlagefläche kann den vollen Umfang des Verformungskörpers umfassen oder aber auch nur abschnittsweise entlang des Umfangs aus einzelnen bzw. mehreren Anlageflächen bestehen.

Das Einpresswerkzeug hat danach einen geringeren Durchmesser als der Innendurchmesser des Vorformungskörpers, und kann beispielsweise als ein Einpressdorn oder ein Einpressstempel ausgestaltet sein, sodass das Einpresswerkzeug durch den Verformungskörpers an der Anlagefläche bzw. den Anlageflächen andrücken kann.

Bei einer Beanspruchung des Hohlkörpers kann die Kraftübertragung der Einpressringelemente auf den Verformungskörper vorteilhaft in eine Verformung des Verformungskörpers umgewandelt werden, wenn der Verformungsbereich des Verformungskörpers aus die beiden Einpressringelemente verbindenden dünnwandigen Verformungsstegen besteht, an denen die Sensoreinrichtung festgelegt ist. Besteht der Verformungsbereich aus Verformungsstegen bzw. sind die Einpressringelemente über diese Verformungsstege zu einem gegebenenfalls einstückig ausgebildeten Verformungskörper verbunden, konzentrieren sich die über die Einpressringelemente von dem umgebenden Hohlkörper auf den Verformungskörper übertragenen Kräfte auf die Verformungsstege und können eine stärkere Verformung der einzelnen Verformungsstege bewirken als beispielsweise bei einem hülsenförmig ausgebildeten Verformungsbereich zwischen den beiden Einpressringelementen, der vergleichsweise steif ist. Als besonders vorteilhaft wird die Anordnung von vier oder sechs Verformungsstegen zwischen den beiden Einpressringelementen erachtet, da der Verformungsbereich dadurch torsionsweich ausgestaltet ist und eine besonders große Verformung des durch die Verformungsstege gebildeten Verformungsbereichs des Verformungskörpers durch die mechanische Einwirkung auf den Hohlkörper erzielt werden kann.

Die für die Erfassung der Beanspruchungsgrößen vorteilhafte Ausgestaltung der Stege als dünnwandige Querschnitte mit geringer Querschnittsfläche bewirkt eine geringe Steifigkeit, was sich vorteilhaft für die Sensoreigenschaften auswirkt, aber den Einpressvorgang erschwert. Beim Einpressen darf es zu keiner Überbeanspruchung der axialen Druckfestigkeit, bzw. Knickstabilität kommen, wenn die Kraftübertragung beim Einpressen über die Verformungsstege geleitet wird. Aus diesem Grund können Maßnahmen ergriffen werden, die zu einer Reduktion der notwendigen Einpresskraft führen.

Gemäß einer besonders vorteilhaften Ausgestaltung der dünnwandigen Verformungsstege kann vorgesehen sein, dass die die beiden Einpressringelemente verbindenden Verformungsstege entlang einer jeweiligen Längsachse der Verformungsstege mindestens abschnittsweise verjüngt sind. Diese Ausgestaltung der Verformungsstege bewirkt eine Spannungsüberhöhung an den an den Verformungsstegen angebrachten Dehnungsmessstreifen, wobei ebenfalls die Steifigkeit der Verformungsstege reduziert wird. Dadurch wird auch die Linearität des angestrebten Messbereichs erheblich verbessert, da der Dehnungsmessstreifen bei gleichwirkenden Kräften eine geringere Verformung bzw. Dehnung zu erfassen haben.

Für eine leichtere und zerstörungsfreie Einbringung der erfindungsgemäßen Messeinrichtung kann vorgesehen sein, dass mindestens ein Umfangsrand von jedem der beiden Einpressringelemente eine Einpressfase aufweist, sodass der Verformungskörper mit der Einpressfase der Einpressringelemente voran in den zylinderförmigen Innenraum des Hohlkörpers eingeführt werden kann. Die Einpressfase ist zweckmäßigerweise in einer Einpressrichtung an jeweils demselben Umfangsrand der beiden Einpressringelemente ausgebildet, sodass ein Einführen und Einpressen der Messeinrichtung erleichtert wird, die in der Einpressrichtung in den Innenraum eingedrückt wird. Die Einpressfase weist dafür zweckmäßiger Weise eine sehr geringe Neigung auf, sodass beim Einpressvorgang eine hohe Keilwirkung entsteht. Das bedeutet, dass eine geringe Einpresskraft eine hohe Radialkraft hervorrufen kann. Dadurch wird sichergestellt, dass die initiale Einpresskraft, die notwendig ist, um den größeren Außendurchmesser der Einpressringelemente an die Formgebung der Innenkontur des Innenraumabschnitts sicherzustellen, so gering ist, dass ein Ausknicken des Verformungskörpers vermieden wird.

Für eine zusätzlich erleichterte Zentrierung der erfindungsgemäßen Messeinrichtung zu Beginn des Einführens in den Hohlkörper kann optional vorgesehen sein, dass an mindestens einem Ende des Verformungskörpers ein Zentrierringelement mit einem geringeren Durchmesser als der Ringelementdurchmesser festgelegt ist, sodass das Zentrierringelement erleichtert in den zylinderförmigen Innenraum des Hohlkörpers eingeführt werden kann und eine vorteilhafte Positionierung und Ausrichtung des nachfolgend in den zylinderförmigen Innenraum eingedrückten Einpressringelements vorgibt. Ein Zentrierringelement an mindesten einem Ende des Verformungskörpers bewirkt zudem, dass der Verformungskörper eine größere axiale Erstreckung aufweist und beim Einpressvorgang ein geringeres Risiko besteht, dass sich der Verformungskörper in dem Innenraum des rohrförmigen Hohlkörpers verkantet, während die auf den Verformungskörper bei dem Eindrückvorgang in den Innenraum des Hohlkörpers ausgeübte Einpresskraft nicht erhöht werden muss.

Gemäß der Erfindung ist vorgesehen, dass ein Durchmesser des Verformungsbereichs geringer als der Ringelementdurchmesser der Einpressringelemente ist. Eine radial nach innen versetzte Anordnung des Verformungsbereichs bewirkt, dass eine Außenfläche des Verformungsbereichs von der Innenwandung des umgebenden Hohlkörpers beabstandet ist. Dies ermöglicht eine unkomplizierte Anordnung von Sensorelementen auch an der Außenfläche des Verformungsbereichs, ohne dass die Sensorelemente an der Innenwandung des rohrförmigen Hohlraums anliegen und dabei zerrieben und/oder beschädigt werden könnten. Der Verformungsbereich lässt sich dadurch von der Innenwandung des Hohlkörpers vollständig entkoppeln und ist nur über die Einpressringelemente mit diesem verbunden.

Für eine vorteilhafte Erfassung von mechanischen Einwirkungen auf den Hohlkörper kann für die erfindungsgemäße Messeinrichtung optional vorgesehen sein, dass die Sensoreinrichtung Dehnungsmessstreifen umfasst, wobei die Dehnungsmessstreifen in dem Verformungsbereich des Verformungskörpers und gegebenenfalls an den Verformungsstegen festgelegt sind.

Dehnungsmessstreifen sind bekanntermaßen gut dazu geeignet, durch ihren bei Druck oder Dehnung ändernden elektrischen Widerstand die auf die Dehnungsmessstreifen einwirkenden mechanischen Kräfte zu erfassen und messbar zu machen. Mehrere Dehnungsmessstreifen können an dem Verformungsbereich bzw. den Verformungsstegen des Verformungsbereichs so festgelegt, ausgerichtet und verschaltet werden, dass die einwirkenden mechanischen Kräfte separat nach ihren jeweiligen Anteilen in Biegekräfte, Drehmomente und Axialkräfte zerlegt und ausgewertet werden können. Etwaige störende oder für eine vorgegebene Auswertung nicht relevante Kraftanteile können so in einfacher Weise kompensiert bzw. ausgeblendet werden, sodass beispielsweise nur auf den Hohlkörper einwirkende Drehmomente von der Sensoreinrichtung erfasst und gemessen werden. Optional ist es auch möglich, je zwei gegenüberliegend auf den Verformungsstegen angebrachte Dehnungsmessstreifen zu einer Vollbrücke bzw. zu einer Wheatstoneschen Messbrücke zu verschalten, sodass unerwünschte Kraftanteile und Messgrößen bei der Auswertung der Messwerte kompensierbar sind.

Die Verarbeitung der Messgrößen kann in der erfindungsgemäßen Messeinrichtung besonders vorteilhaft erfolgen, wenn die Messeinrichtung eine elektronische Verarbeitungseinrichtung umfasst, welche Messsignale der Sensoreinrichtung aufbereitet und verarbeitet. Die elektronische Verarbeitungseinrichtung kann zum Beispiel eine Messelektronik oder eine Leiterplatte mit einem Mikrocontroller sein. Die elektronische Verarbeitungseinrichtung kann die erfassten Messgrößen schon vorverarbeiten, filtern und/oder Berechnungen mit diesen durchführen. Dadurch können die Messgrößen mit einer hohen Abtastrate erfasst werden, während die Weiterleitung von Informationen mit reduzierten, vorverarbeiteten Daten erfolgen kann. Zudem kann eine elektronische Verarbeitungseinrichtung mit einem Mikrocontroller beispielsweise Aktoren betätigen oder Informationen mit Datenübertragungseinrichtungen versenden, sobald die erfassten Messgrößen bestimmte Grenzwerte über- oder unterschreiten.

Die erfindungsgemäße Messeinrichtung kann vorteilhaft mit elektrischer Energie versorgt werden, wenn die Messeinrichtung eine elektrische Versorgungsleitung mit einem Steckverbinder aufweist, mit welcher die elektronischen Komponenten der Messeinrichtung dauerhaft mit elektrischer Energie versorgt werden können. Der Steckverbinder kann beispielsweise an einer Stirnseite oder durch eine Ausnehmung in einer Mantelfläche des Hohlkörpers aus dem Hohlkörper herausragen, sodass die erfindungsgemäße Messeinrichtung über den Steckverbinder mit elektrischer Energie versorgt werden kann.

Optional und besonders vorteilhaft kann die erfindungsgemäße Messeinrichtung einen elektrischen Energiespeicher aufweisen, sodass die elektronischen Komponenten der Messeinrichtung ohne eine externe Energieversorgung zeitbegrenzt bzw. abhängig von einem Ladezustand des elektrischen Energiespeichers mit elektrischer Energie versorgt werden können. Dadurch kann die erfindungsgemäße Messeinrichtung energieautark betrieben werden, da eine zeitbegrenzte Unterbrechung der elektrischen Versorgung von außerhalb des Hohlkörpers mit dem Energiespeicher überbrückt werden kann. Je nach Bedarf an elektrischer Energie und vorhandenem Raum in dem Innenraum des Hohlkörpers eignen sich Akkumulatoren oder auch Kondensatoren als Energiespeicher. Optional zur Aufladung des Energiespeicher mittels eines Steckverbinder kann der Energiespeicher auch kontaktlos mittels einer Induktionsspule aufgeladen werden. Dadurch kann die Notwendigkeit für einen Steckverbinder und einen leitungsgebundenen Kontakt mit einer externen Stromversorgung entfallen.

Es ist ebenfalls möglich, dass die Messeinrichtung eine Einrichtung zur Umwandlung von Bewegungsenergie in elektrische Energie aufweist, mit welcher der Energiespeicher mit elektrischer Energie befüllt werden kann. Eine derartige Ausgestaltung der Messeinrichtung ist insbesondere bei einer Verwendung der Messeinrichtung in Hohlkörpern vorteilhaft, die bei einer bestimmungsgemäßen Verwendung regelmäßig oder kontinuierlich bewegt werden, wie es beispielsweise bei rotierenden Hohlwellen der Fall ist.

Damit die erfindungsgemäße Messeinrichtung möglichst energieautark betrieben werden kann, kann optional vorgesehen sein, dass an einem Generatorgewicht ein dauermagnetbehafteter Rotor festgelegt ist, wobei das Generatorgewicht und der dauermagnetbehaftete Rotor innerhalb der Messeinrichtung mittels Wälzlager gelagert sind, sodass eine Rotationsbewegung der Messeinrichtung um den in Wälzlagern gelagerten dauermagnetbehafteten Rotor eine elektrische Spannung in mindestens einer an der drehbaren Messeinrichtung festgelegten Spulenwicklung erzeugen kann. Damit kann die erfindungsgemäße Messeinrichtung ohne Bedarf an extern zugeführter elektrischer Energie und damit energieautark in dem Hohlkörper gekapselt angeordnet sein und ohne eine mechanisch kontaktierende Verbindung mit der Umgebung betrieben werden. An der Elektronik kann ein elektrischer Energiespeicher angebracht sein, der durch die Rotationsbewegung kontinuierlich den elektrischen Energiespeicher auflädt, während die elektronische Verarbeitungseinrichtung bei Stillstand aus dem elektrischen Energiespeicher versorgt werden kann. Zusätzliche elektronische Schaltungen können die von dem dauermagnetbehafteten Rotor induzierte Spannung aufbereiten und/oder glätten, bevor sie in der Messeinrichtung verwertet wird.

Zur Kommunikation und Übertragung der Messsignale kann gemäß einer vorteilhaften Ausgestaltung der erfindungsgemäßen Messeinrichtung vorgesehen sein, dass die Messeinrichtung ein Funkübertragungsmodul aufweist, mit dem eine drahtlose Kommunikation stattfinden kann. Das Funkübertragungsmodul kann dafür einen Kommunikationskanal zu einem Empfänger außerhalb des Hohlkörpers herstellen, womit Informationen beispielsweise über physikalische Messgrößen an den Empfänger übermittelt werden können. Das Funkübertragungsmodul kann dazu nach einer besonders vorteilhaften Ausführung über eine in einer Querbohrung versenkten Antenne verfügen, sodass die mechanische Robustheit des Gesamtsystems gewährleistet ist und es auch bei mechanischer Einwirkung auf den Hohlkörper zu keiner Beschädigung der elektronischen Komponenten kommen kann.

Besonders vorteilhaft für eine Kommunikation und Übertragung der Messsignale kann gemäß einer Ausgestaltung der Erfindung vorgesehen sein, dass in den Hohlkörper eine Ausnehmung eingebracht ist, in die eine an die Ausnehmung angepasste und auf einer Leiterplatte aufgebrachten Antennenvorrichtung eingepasst ist, wobei die Antennenvorrichtung von einer die Ausnehmung abdichtenden Hülse umfasst ist. Die Ausnehmung kann wieder ein quer zur Längsachse des Hohlkörpers verlaufendes Querloch oder eine Querbohrung sein. Vorteilhaft ist hierbei eine besonders effektive Strahlungscharakteristik der Antennenvorrichtung, ohne dabei den Innenraumabschnitt durch Verschmutzungen von außen zu kontaminieren.

Die Kommunikation und Übertragung der Messsignale können in beiden Ausgestaltungen vorteilhaft mittels Bluetooth (Low Energy) erfolgen, was eine gewisse Kompatibilität mit Smartphones und Tablets gewährleistet.

Für rotierende Anwendungen der erfindungsgemäßen Messeinrichtung kann vorteilhaft vorgesehen sein, dass die Messeinrichtung eine Wuchtaufnahme aufweist, mit welcher ein Ausgleichsmassenelement an dem Verformungskörper festgelegt werden kann. Optional kann durch mindestens ein Ausgleichsmassenelement eine ansonsten asymmetrische Masseverteilung der erfindungsgemäßen Messeinrichtung kompensiert werden, wobei die Wuchtaufnahme das mindestens eine Ausgleichsmassenelement vorzugsweise kapselnd umfasst. Die Unwuchtaufnahme kann vorteilhaft aus Kunststoff bestehen.

Erweiterte Anwendungsmöglichkeiten können sich für die erfindungsgemäße Messeinrichtung ergeben, wenn die Messeinrichtung mindestens eine inertiale Messeinheit aufweist, die Drehraten- und/oder Beschleunigungsmesswerte erfassen kann. Aus den Drehraten- und/oder Beschleunigungsmesswerten kann die elektronische Verarbeitungseinrichtung beispielsweise Lagepositionen, Drehzahlen oder andere berechnete Kenngrößen wie beispielsweise Energie oder Leistung etc. berechnen und bereitstellen. Vorteilhafterweise kann die inertiale Messeinheit 5 mm bis 30 mm radial beabstandet zur Rotationsachse der erfindungsgemäßen Messeinrichtung angeordnet werden, sodass eine Rotation der erfindungsgemäßen Messeinrichtung zu nennenswerten Beschleunigungen führt, die dann in eine Drehzahl umgerechnet werden können. Weiter können demgemäß auch über eine Sensorfusion aus den verschiedenen Sensorquellen (Dehnungsmessstreifen, inertiale Messeinheit) in einem in der erfindungsgemäßen Messeinrichtung untergebrachten Mikrocontroller vorab dezentrale Berechnungen zur Identifikation von Zuständen der Maschinenkomponenten durchgeführt werden - z.B. das Ankündigen einer notwendigen Wartung einer Gelenkwelle oder auch eine Intentionserkennung von Betätigungsgriffen.

Nachfolgend ist die erfindungsgemäße Messeinrichtung exemplarisch in schematischen Darstellungen gezeigt. Es zeigen:
Figur 1 eine perspektivische Ansicht einer erfindungsgemäßen Messeinrichtung in einem zylindrischen Innenraum eines teilweise geschnitten dargestellten rohrförmigen Hohlkörpers,
Figur 2 und Figur 3a in einer Schnittansicht eine schematische Darstellung eines Stahlrohrs als Hohlkörper und ein Einpressringelement der Messeinrichtung jeweils in einem nicht miteinander verbundenen und in einem miteinander verbundenen Zustand, in welchem das Einpressringelement in den näherungsweise zylindrischen Innenraum des Hohlkörpers eingepresst ist,
Figur 3b einen radialen Dehnungsverlauf ε der Einpressringelemente aufgetragen über ein Übermaß ΔD zu Figur 2 bzw. Figur 3b,
Figur 4 eine perspektivische Ansicht einer weiteren Messeinrichtung in einem ebenfalls teilweise geschnitten dargestellten Hohlkörper, der einen kleineren Durchmesser als der in Figur 1 gezeigte Hohlkörper aufweist,
Figur 5a eine Seitenansicht und eine perspektivische Ansicht eines Verformungskörpers der Messeinrichtung mit zwei jeweils an zwei Enden des Verformungskörpers ausgebildeten Einpressringelementen, mit einem Zentrierringelement und mit zwei Einpressfasen,
Figur 5b eine Ausgestaltung eines Verformungskörpers mit Anlageflächen in perspektivischer Ansicht,
Figur 5c einen Kraftverlauf F über eine Zeit t eines Einpressvorgangs eines Verformungskörpers in den Innenraumabschnitt eines Hohlkörpers,
Figur 6 eine teilweise geschnitten dargestellte Ansicht einer wiederum abweichend ausgestalteten Messeinrichtung in einem Drehmomentaufnehmer für eine Antriebswelle mit einer Unwuchtaufnahme, einem Generatorgewicht und einem elektrischen Generator,
Figur 7 ein Anwendungsbeispiel einer erfindungsgemäßen Messeinrichtung in einer Kreuzgelenkwelle, und
Figur 8 ein Anwendungsbeispiel einer erfindungsgemäßen Messeinrichtung in einem rollbaren Transportwagen.

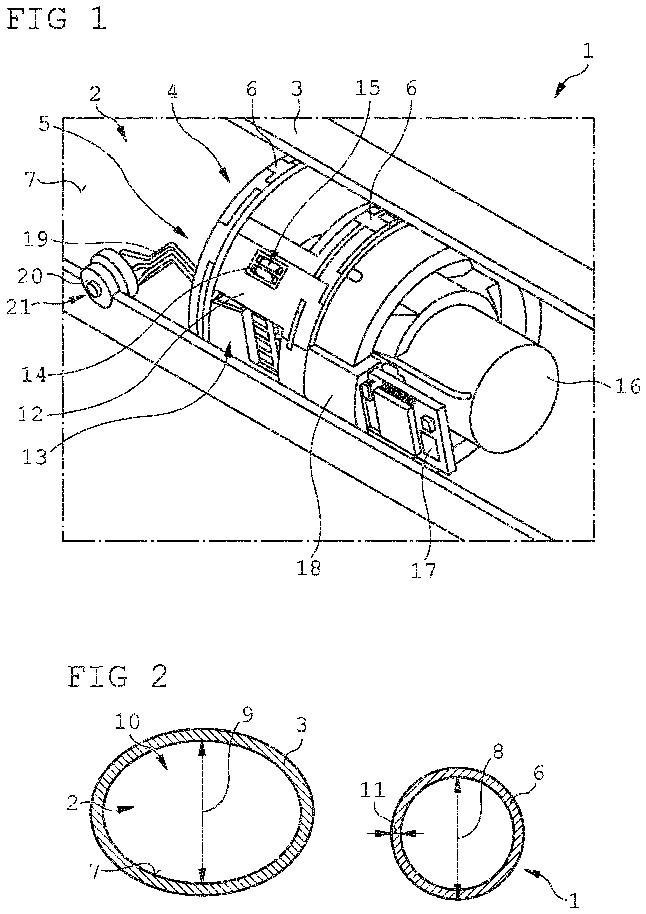

Figur 1 zeigt eine erfindungsgemäße ausgestaltete Messeinrichtung 1 in einem näherungsweise zylinderförmigen Innenraumabschnitt 2 eines rohrförmigen Hohlkörpers 3, der in diesem Ausführungsbeispiel ein Stahlrohr ist. Der Hohlkörper 3 kann Bestandteil einer Maschine oder einer größeren Anlage sein. Die Messeinrichtung 1 kann physikalische Messgrößen und Kräfte, die auf den Hohlkörper 3 einwirken, erfassen, aufbereiten, versenden und gegebenenfalls auch aufzeichnen.

Damit die Messeinrichtung 1 in dem näherungsweise zylinderförmigen Innenraumabschnitt 2 des Hohlkörpers 3 die gewünschten Messgrößen präzise erfassen kann muss die Messeinrichtung 1 in dem Hohlkörper 3 kraftschlüssig festgelegt sein, um bei einer mechanischen Belastung des Hohlkörpers 3 entsprechend verformt zu werden, sodass diese Verformung mit geeigneten Sensoren erfasst werden kann. Nach dem Einführen und Festlegen der Messeinrichtung 1 in dem Hohlkörper 3 darf es zu keiner nennenswerten Relativbewegung der Messeinrichtung 1 zum Hohlkörper 3 mehr kommen, durch welche eine Messung der auf den Hohlkörper 3 einwirkenden mechanischen Belastung verfälscht werden könnte.

Die Messeinrichtung 1 weist einen Verformungskörper 4 auf, an dessen gegenüberliegenden Enden 5 jeweils ein Einpressringelement 6 ausgebildet ist. Die Einpressringelemente 6 werden während des Einführens der Messeinrichtung 1 in den zylinderförmigen Innenraumabschnitt 2 mit einem Einpressvorgang einer elastischen Verformung unterworfen und drücken dadurch mit einer Rückstellkraft gegen eine Innenwandung 7 des näherungsweise zylinderförmigen Innenraumabschnitts 2. Beide Einpressringelemente 6 weisen jeweils über den gesamten Umfang eine derart geringe Ringelementstärke 11 aufweist, sodass sich das Einpressringelement 6 an eine Formgebung der Innenwandung 7 des Hohlkörpers 3 anpasst und sich aufgrund der elastischen Verformung erzeugten Rückstellkräfte kraftschlüssig an die Innenwandung 7 anpresst. Diese elastische Verformung ermöglicht es, die Messeinrichtung 1 auch in Hohlkörpern 3 festlegen zu können, die keine an die Messeinrichtung 1 angepasste Passung aufweisen, sondern die in vielen Bereichen üblichen Herstellungstoleranzen aufweisen.

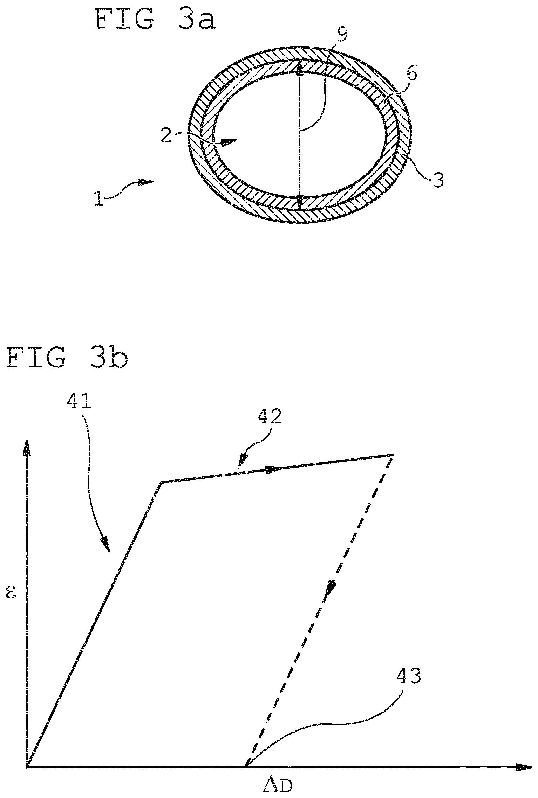

Figur 2 und 3a verdeutlichen die Wirkung der erfindungsgemäß ausgebildeten Einpressringelemente 6, in dem sie jeweils schematisch den nur näherungsweise zylinderförmigen und zur Verdeutlichung mit einer überhöhten ovalen Formgebung dargestellten Innenraumabschnitt 2 des rohrförmigen Hohlkörpers 3, die Innenwandung 7 des Hohlkörpers 3 und von der Messeinrichtung 1 lediglich ein einzelnes Einpressringelement 6 in einer Schnittansicht zeigen. Figur 2 zeigt den Hohlkörper 3 und ein daneben dargestelltes Einpressringelement 6 einzeln, noch bevor die Messeinrichtung 1 in den Innenraumabschnitt 2 des Hohlkörpers 3 eingebracht ist. Dabei ist ein Ringelementdurchmesser 8 größer als ein kleinster Durchmesser 9 des oval dargestellten rohrförmigen Hohlkörpers 3. Wird das Einpressringelement 6 durch eine Einpressöffnung 10 in den Innenraumabschnitt 2 des rohrförmigen Hohlkörpers 3 eingeführt, bzw. hineingepresst, wird das Einpressringelement 6 dabei elastisch und gegebenenfalls auch plastisch verformt und schmiegt sich kraftschlüssig an die Innenwandung 7 des rohrförmigen Hohlkörpers 3, wobei das Einpressringelement 6 radial gegen die Innenwandung 7 drückt. Figur 3a zeigt den Hohlkörper 3 und das darin festgelegte Einpressringelement 6 nach dem Einpressvorgang, wobei die kraftschlüssige Verbindung dadurch aufrechterhalten wird, dass eine Ringelementstärke 11 des Einpressringelements 6 mindestens 3%, aber nicht mehr als 25% des Ringelementdurchmessers 8 beträgt. Die Rückstellkräfte der

Einpressringelemente 6 können dabei mit einer größeren Ringelementstärke 11 erhöht werden. Mit einer kleineren Ringelementstärke 11 kann eine stärkere Verformung der Einpressringelemente 6 und damit eine bessere Anpassung an die Innenwandung 7 erfolgen, falls die Innenwandung 7 deutlich von einer idealen Kreisform im Querschnitt abweichen sollte.

Figur 3b zeigt den Einpressvorgang der Messvorrichtung 1 in Form eines radialen Dehnungsverlaufs ε der Einpressringelemente zu Figur 2 bzw. Figur 3b, aufgetragen über ein Übermaß ΔD. Bei einer elastischen Auslegung der Einpressringelemente 6 mit einem kleinen Übermaß befinden sich die Einpressringelemente 6 in einem elastischen Bereich 41 der Kurve. Werden die Einpressringelemente 6 derart ausgelegt, dass die Ringelementdurchmesser ein gewisses Übermaß überschreiten, befinden sich die Einpressringelemente 6 in einem plastischen Bereich 42 der Kurve, wobei es bei den Einpressringelementen 6 zu einer nachhaltigen Reststauchung 43 und einer plastischen Formänderung kommt, selbst wenn die Einpressringelement 6 wieder aus dem Innenraumabschnitt 2 entfernt werden.

Figur 1 zeigt weiter, dass der einteilig ausgebildete Verformungskörper 4 neben den Einpressringelementen 6 vier Verformungsstege 12 aufweist, die einen Verformungsbereich 13 des Vorformungskörpers 4 bilden. An jedem Verformungssteg 12 ist eine Dehnungsmessstreifenanordnung 14 befestigt, wobei jeweils zwei gegenüberliegende Dehnungsmessstreifenanordnungen 14 zu einer als Wheatstonesche Messbrücke bezeichneten Vollbrücke elektrisch leitend verschaltet sind, sodass sich unerwünschte Kraftanteile, die auf die Dehnungsmessstreifen 14 wirken, ermitteln und gegebenenfalls kompensieren lassen. Alle Dehnungsmessstreifenanordnungen 14 zusammen bilden eine Sensoreinrichtung 15, die mechanische Einwirkungen auf den Hohlkörper 3 über die Einpressringelemente 6 und über den Verformungsbereich 13, an dem die Sensoreinrichtung 15 festgelegt ist, erfassen kann.

Figur 1 zeigt auch, dass die Messeinrichtung 1 einen elektrischen Energiespeicher 16 aufweist, der eine elektronische Verarbeitungseinrichtung 17 versorgen kann. Die elektronische Verarbeitungseinrichtung 17 weist in Figur 1 eine Auswerteelektronik auf, welche die physikalischen Messgrößen der Sensoreinrichtung 15 ausliest und verarbeitet. Alle diese Komponenten, bzw. der elektrische Energiespeicher 16 und die elektronische Verarbeitungseinrichtung 17, sind von einer Kunststoffhalterung 18 mechanisch fixierend umfasst und werden dadurch zusammengehalten. Der elektrische Energiespeicher 16 wird über eine Versorgungsleitung 19 aufgeladen, die zu einem Steckverbinder 20 führt, der über ein in Hohlkörper 3 ausgebildeten Bohrloch 21 von außen zugänglich ist.

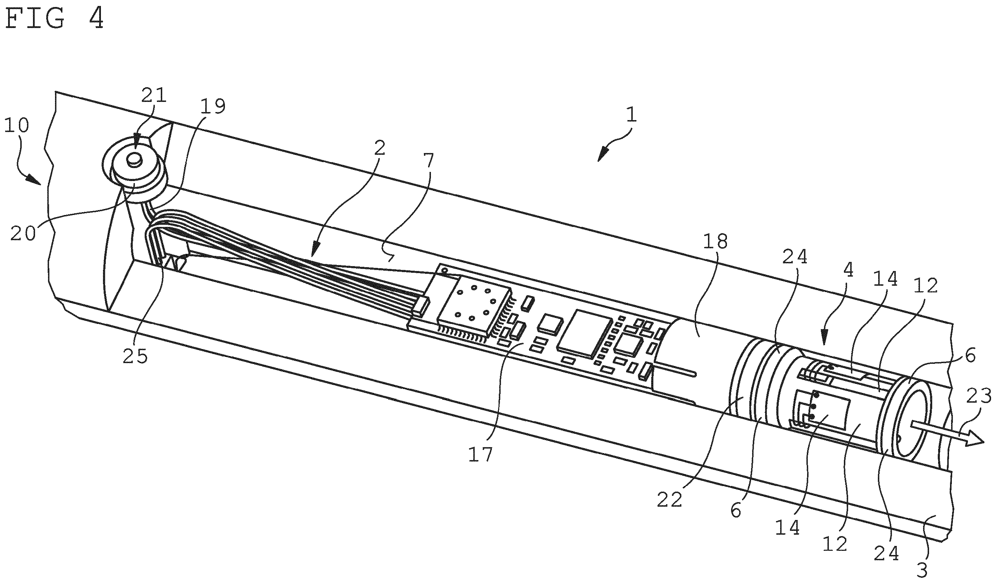

Figur 4 zeigt eine alternative Ausgestaltung der Messeinrichtung 1 in einem ebenfalls näherungsweise zylinderförmigen Innenraumabschnitt 2 eines rohrförmigen Hohlkörpers 3. Da der Durchmesser des Hohlraumumfangs 9 bei diesem Hohlkörper 3 geringer als bei dem in Figur 1 exemplarisch gezeigten Hohlkörper 3 ist, sind die Komponenten der Messeinrichtung 1 in einer axialen Richtung hintereinander raumsparend angeordnet, wobei sie von der Kunststoffhalterung 18 zusammengehalten werden. Von der Einpressöffnung 10 aus kann die Messeinrichtung 1 weit in den Innenraumabschnitt 2 des Hohlkörpers 3 hineingeführt und eingepresst werden, wobei ein Zentrierringelement 22 für eine bessere Führung der Messeinrichtung 1 beim Einpressen sorgt. Durch das Zentrierringelement 22 kann der einzuführende Verformungskörper 4 nicht so einfach verkanten, wodurch ein schiefes Einpressen der Messeinrichtung 1 verhindert werden kann. Zusätzlich zum Zentrierringelement 22 weisen die Einpressringelemente 6 jeweils eine in die Einpressrichtung 23 gerichtete Einpressfase 24 auf, mit welchen die Einpressringelemente 6 des Verformungskörpers 4 leichter in den Innenraumabschnitt 2 des Hohlkörpers 3 eingepresst werden können.

Die Messeinrichtung 1 in Figur 4 weist außerdem ein nicht näher dargestelltes Funkübertragungsmodul auf, an das eine Antenne 25 in der Nähe des Steckverbinders 20 angeschlossen ist, mit der eine drahtlose Kommunikation zwischen der Messeinrichtung 1 und einem externen Datenempfänger außerhalb des Hohlkörpers 3 stattfinden kann.

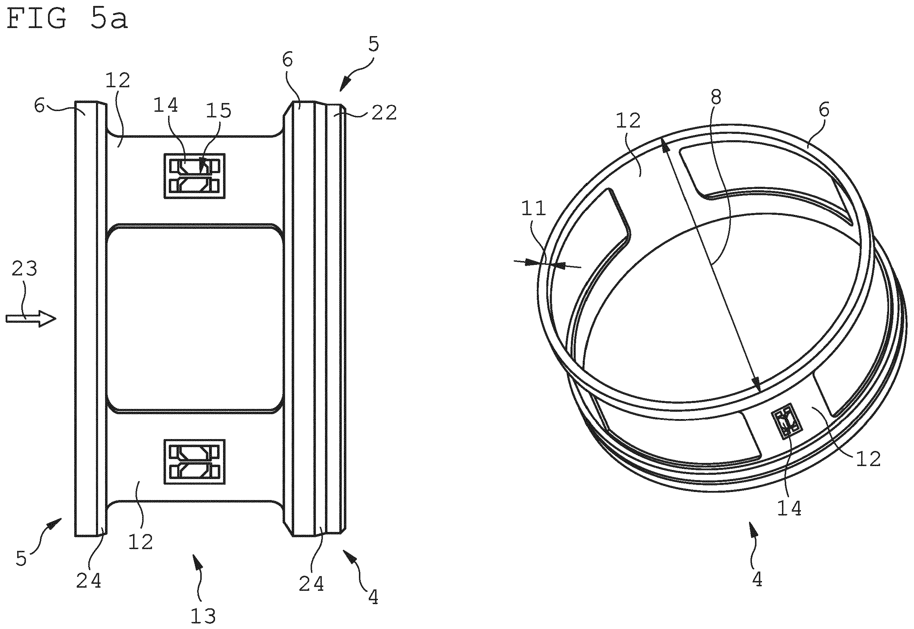

Figur 5a zeigt den Verformungskörper 4 der Messeinrichtung 1 detaillierter in einer Seitenansicht und in einer perspektivischen Ansicht. Der Verformungskörper 4 weist eine Ringelementstärke 11 auf, die in einem Bereich von 3% bis 25% des Ringelementdurchmessers 8 liegt, wobei die kraftschlüssige Verbindung mit der Innenwandung 7 des rohrförmigen Hohlkörpers 3 jeweils robuster und zuverlässiger ist, je größer die Ringelementstärke 11 ist. In der Seitenansicht des Verformungskörpers 4 ist beginnend von rechts das Zentrierringelement 22 dargestellt, dessen Durchmesser kleiner als der Ringelementdurchmesser 8 der Einpressringelemente 6 ist, sodass dieser Bereich ohne Kraftaufwand in den zylinderförmigen Innenraumabschnitt 2 des Hohlkörpers 3 eingeführt werden kann und dabei als Zentrierhilfe dient, damit der Verformungskörper 4 während des Einschiebens in den Hohlkörper 3 nicht verkantet. Ebenfalls in die Einpressrichtung 23 sind die Einpressfasen 24 an den Einpressringelementen 6 dargestellt, wobei die Einpressringelemente 6 den Verformungsbereich 13 beidseitig begrenzen und auf den Hohlkörper 3 einwirkende mechanische Kräfte auf den Verformungsbereich 13 übertragen. Der Verformungsbereich 13 umfasst vier Verformungsstege 12, an denen je eine Dehnungsmessstreifenanordnung 14 angeordnet ist, welche die einwirkenden Kraftanteile in eine elektrische Widerstandsänderung umwandeln.

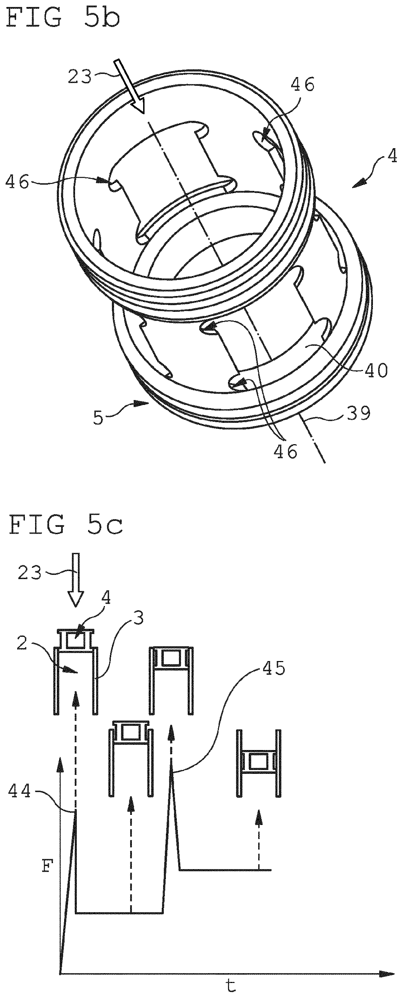

Figur 5b zeigt zusätzlich zu Figur 5a einen Verformungskörper 4 in einer perspektivischen Ansicht, in der eine radial zu einer Längsachse 39 des Vorformungskörpers 4 nach innen vorspringende Anlagefläche 40 zu sehen ist, die dem in die Einpressrichtung 23 liegenden Ende 5 des Verformungskörpers 4 zugeordnet ist, sodass an der mindestens einen vorspringenden Anlagefläche 40 ein Einpresswerkzeugs anlegen und die Messvorrichtung 1 in Einpressrichtung 23 in den Innenraumabschnitt 2 einpressen kann. Dadurch kann der Verformungskörpers 4 beschädigungsfrei in den Innenraumabschnitt 2 des Hohlkörpers 3 eingepresst werden. Weiter ist in Figur 5b gezeigt, wie die Verformungsstege 12 mehrere abschnittsweise Verjüngungen 46 der Verformungsstege aufweisen, sodass die Linearität der Messvorrichtung verbessert werden kann.

Figur 5c zeigt zusätzlich zu Figur 5a und 5b einen Kraftverlauf F über eine Zeit t bei dem Einpressvorgang des Verformungskörpers 4. Initial muss eine erste Kraftspitze 44 aufgebracht werden, bis der Verformungskörpers 4 in den Innenraumabschnitt 2 des Hohlkörpers 3 eintritt. Danach muss eine geringere Kraft als die erste Kraftspitze 44 zum Einpressen aufgebracht werden, bis das zweite Einpressringelement 6 in den Innenraumabschnitt 2 des Hohlkörpers 3 eingepresst werden muss. Dafür muss eine zweite Kraftspitze 45 aufgebracht werden, die sogar höher sein muss als die erste Kraftspitze 44. Anschließend ist eine reduziertere Kraft F nötig, um den Verformungskörper 4 an seine Zielposition zu befördern.

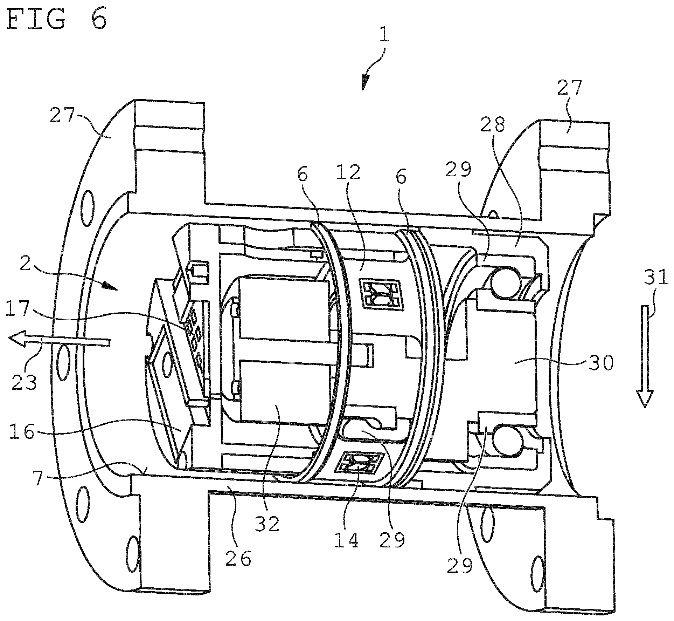

Figur 6 zeigt eine alternative Ausgestaltung der Messeinrichtung 1 für rotierende Anwendungen, wobei die Messeinrichtung 1 innerhalb eines Drehmomentaufnehmers 26 angeordnet und festgelegt ist, der über zwei gegenüberliegende Flansche 27 beispielsweise zwischen zwei nicht dargestellten Antriebswellenabschnitten mit diesen verbunden werden kann. Die unsymmetrische Aufteilung der Komponenten der Messeinrichtung 1 kann zu dynamischen Unwuchten während der Rotation des Drehmomentaufnehmers 26 führen, weshalb die Messeinrichtung 1 eine Wuchtaufnahme 28 aus Kunststoff für ein nicht näher dargestelltes Ausgleichsmassenelement aufweist, sodass die Unwucht zumindest teilweise kompensiert ist und die Rotation des Drehmomentaufnehmers 26 durch die Messeinrichtung 1 nicht übermäßig beeinträchtigt wird. Die Wuchtaufnahme 28 aus Kunststoff ist besonders vorteilhaft, da dadurch das Einführen und Einpressen der Messeinrichtung 1 nicht behindert wird und auf den Drehmomentaufnehmer 26 einwirkende Drehmomente abgefedert werden bzw. nur über die Einpressringelemente 6 auf den Verformungsbereich 13 übertragen werden.

Über zwei Wälzlager 29 entkoppelt weist die Wuchtaufnahme 28 zusätzlich ein Generatorgewicht 30 auf, an welchem ein dauermagnetbehafteter Rotor 32 festgelegt ist, wobei die Dauermagnete eine Spannung in einer Spulenwicklung der drehbaren Messeinrichtung 1 induzieren. Die bei einer Rotation des Drehmomentaufnehmers 26 erzeugte Rotationsenergie kann dadurch in elektrische Energie umgewandelt werden, die zum Betrieb der elektrischen Verarbeitungseinrichtung 17 genutzt werden kann. Dadurch wird ein autarker Betrieb der Messeinrichtung 1 ermöglicht, die nicht mehr auf elektrische Energie von außerhalb des Drehmomentaufnehmers 26 angewiesen ist.

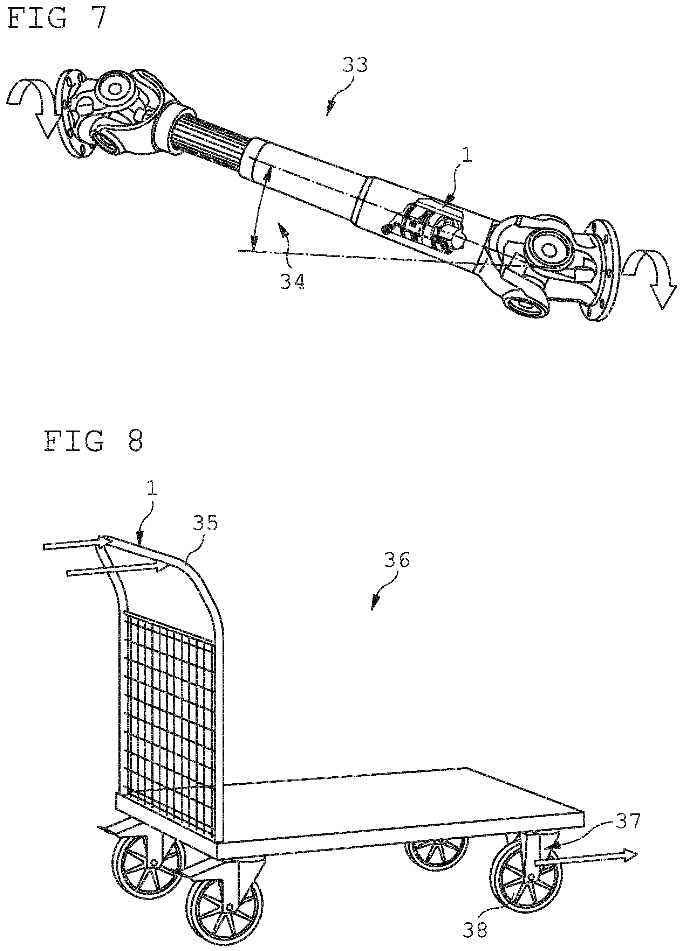

Die Figur 7 zeigt ein Anwendungsbeispiel der Messeinrichtung 1, die in einer Kreuzgelenkwelle 33 integriert ist. Dabei kann die Messeinrichtung 1 schon in ein Halbzeug eines Stahlrohres der Kreuzgelenkwelle 33 untergebracht werden, dass anschließend im Rahmen des Produktionsprozesses zu einem Bestandteil der Kreuzgelenkwelle 33 weiterverarbeitet werden kann. Die Messeinrichtung 1 ist dabei innerhalb des Halbzeugs geschützt vor nachfolgenden Produktionsschritte wie beispielsweise Schweißen, Lackieren, Sandstrahlen, Bohren, Fräsen, Drehen, Rohrbiegen, Crimpen etc. Eine inertiale Messeinheit in der Messeinrichtung 1 kann während des Betriebs beispielsweise einen Knickwinkel 34 der Kreuzgelenkwelle 33 erfassen, womit die Betriebsfestigkeit der Kreuzgelenkwelle 33 überwacht werden kann.

Die Figur 8 zeigt ein alternatives Anwendungsbeispiel der Messeinrichtung 1, wobei sich diese in einem Griff 35 eines rollbaren Transportwagens 36 befindet. Drückt ein Benutzer den Griff 35 mit einer bestimmten Kraft in Richtung der gewünschten Bewegungsrichtung, erfasst die Messeinrichtung 1 die auf den als Griff 35 ausgebildeten Hohlkörper 3 einwirkende Kraft, verarbeitet die Messgröße und kann ein entsprechendes Ausgangssignal an einen Antriebsmotor 37 senden, der mindestens eines der Wagenräder 38 antreiben kann. Dadurch wirkt die Messeinrichtung 1 mit den Antriebsmotoren 37 fahrunterstützend. Das Anwendungsbeispiel ist nicht nur auf rollbare Transportwägen 36 beschränkt, sondern kann beispielsweise leicht auch auf elektrisch betriebene Fahrräder oder Kinderwägen angepasst werden.

### Bezugszeichenliste

1. Messeinrichtung
2. zylinderförmiger Innenraumabschnitt
3. Hohlkörper
4. Verformungskörper
5. Enden des Verformungskörpers
6. Einpressringelement
7. Innenwandung des rohrförmigen Hohlraums
8. Ringelementdurchmesser
9. Hohlraumumfang
10. Einpressöffnung
11. Ringelementstärke
12. Verformungsstege
13. Verformungsbereich
14. Dehnungsmessstreifenanordnung
15. Sensoreinrichtung
16. Elektrischer Energiespeicher
17. Elektronische Verarbeitungseinrichtung
18. Kunststoffhalterung
19. Versorgungsleitung
20. Steckverbinder
21. Bohrloch
22. Zentrierringelement
23. Einpressrichtung
24. Einpressfase
25. Antenne
26. Drehmomentaufnehmer
27. Flansch
28. Wuchtaufnahme
29. Wälzlager
30. Generatorgewicht
31. Schwerkraft
32. Dauermagnetbehafteter Rotor
33. Kreuzgelenkwelle
34. Knickwinkel
35. Griff
36. Rollbarer Transportwagen
37. Antriebsmotor
38. Wagenräder
39. Längsachse des Verformungskörpers
40. Anlageflächen für ein Einpresswerkzeug
41. Elastischer Bereich
42. Plastischer Bereich
43. Reststauchung
44. Erste Kraftspitze
45. Zweite Kraftspitze
46. Verjüngung der Verformungsstege

## Patentansprüche

1. Messeinrichtung (1) zur Erfassung einer mechanischen Beanspruchung eines Hohlkörpers (3) mit einem zylinderförmigen Innenraumabschnitt (2), wobei die Messeinrichtung (1) einen in dem zylinderförmigen Innenraumabschnitt (2) kraftübertragend festlegbaren Verformungskörper (4) mit einem Verformungsbereich (13) und eine Sensoreinrichtung (15) aufweist, die in dem Verformungsbereich (13) festgelegt ist und eine aufgrund der mechanischen Beanspruchung des Hohlkörpers (3) auf den Verformungskörper (4) übertragene mechanische Beanspruchung und dadurch erzwungene Verformung des Verformungsbereichs (13) des Verformungskörpers (4) erfassen kann, wobei an zwei gegenüberliegenden Enden (5) des Verformungskörpers (4) jeweils ein elastisch verformbares Einpressringelement (6) angeordnet ist und das Einpressringelement (6) mindestens abschnittsweise eine derart geringe
Ringelementstärke (11) aufweist, sodass sich das Einpressringelement (6) an eine Innenwandung (7) des Hohlkörpers (3) anpasst und kraftschlüssig an die Innenwandung (7) angepresst wird, sodass eine mechanische Beanspruchung des Hohlkörpers (3) über die Einpressringelemente (6) auf den
Verformungskörper (4) übertragen wird und eine mit der Sensoreinrichtung (15) erfassbare Verformung des Verformungsbereichs (13) des Verformungskörpers (4) bewirkt, wobei ein Durchmesser des Verformungsbereichs (13) geringer als ein Ringelementdurchmesser (8) der Einpressringelemente (6) ist,
**dadurch gekennzeichnet, dass**
der Verformungsbereich (13) des Verformungskörpers (4) aus die beiden Einpressringelemente (6) verbindenden Verformungsstegen (12) besteht, an denen die Sensoreinrichtung (15) festgelegt ist

2. Messeinrichtung (1) nach Anspruch 1, **dadurch gekennzeichnet, dass** die geringe Ringelementstärke (11) der Einpressringelemente (6) bezogen auf einen jeweiligen Ringelementdurchmesser (8) der Einpressringelemente (6) in einem Bereich von 3% bis 25% vorgegeben ist.

3. Messeinrichtung (1) nach Anspruch 1 oder Anspruch 2, **dadurch gekennzeichnet, dass** die Einpressringelemente (6) aus einem Material bestehen, welches bei einer erzwungenen Verformung über eine Elastizitätsgrenze hinaus eine plastische Verformung zulässt.

4. Messeinrichtung (1) nach einem der vorstehenden Ansprüche, **dadurch gekennzeichnet, dass** das in die Einpressrichtung (23) liegende Ende (5) des Verformungskörpers (4) mindestens eine radial zu einer Längsachse (39) des Vorformungskörpers (4) nach innen vorspringende Anlagefläche (40) aufweist, sodass mit einem an der mindestens einen vorspringenden Anlagefläche (40) anliegenden Einpresswerkzeug anlegen die Messvorrichtung (1) in Einpressrichtung (23) in den Innenraumabschnitt (2) eingepresst werden kann.

5. Messeinrichtung (1) nach einem der vorstehenden Ansprüche, **dadurch gekennzeichnet, dass** die die beiden Einpressringelemente (6) verbindenden Verformungsstege (12) entlang einer jeweiligen Längsachse der Verformungsstege (12) mindestens abschnittsweise verjüngt sind.

6. Messeinrichtung (1) nach einem der vorstehenden Ansprüche, **dadurch gekennzeichnet, dass** mindestens ein Umfangsrand von jedem der beiden Einpressringelemente (6) eine Einpressfase (24) aufweist, sodass der Verformungskörper (4) mit der Einpressfase (24) der Einpressringelemente (6) voran in den zylinderförmigen Innenraum (2) des Hohlkörpers (3) eingeführt werden kann.

7. Messeinrichtung (1) nach einem der vorstehenden Ansprüche, **dadurch gekennzeichnet, dass** an mindestens einem stirnseitigen Ende (5) des Verformungskörpers (4) ein Zentrierringelement (22) mit einem geringeren Durchmesser als der Ringelementdurchmesser (8) festgelegt ist, sodass das Zentrierringelement (22) erleichtert in den zylinderförmigen Innenraum (2) des Hohlkörpers (3) eingeführt werden kann und eine vorteilhafte Positionierung und Ausrichtung des nachfolgend in den zylinderförmigen Innenraum (2) eingedrückten Einpressringelements (6) vorgibt.

8. Messeinrichtung (1) nach einem der vorstehenden Ansprüche, **dadurch gekennzeichnet, dass** die Sensoreinrichtung (15) Dehnungsmessstreifen (14) umfasst, wobei die Dehnungsmessstreifen (14) in dem Verformungsbereich (13) des Verformungskörpers (3) und gegebenenfalls an den Verformungsstegen (12) festgelegt sind.

9. Messeinrichtung (1) nach einem der vorstehenden Ansprüche, **dadurch gekennzeichnet, dass** die Messeinrichtung (1) eine elektronische Verarbeitungseinrichtung (17) umfasst, welche Messsignale der Sensoreinrichtung (15) aufbereitet und verarbeitet.

10. Messeinrichtung (1) nach einem der vorstehenden Ansprüche, **dadurch gekennzeichnet, dass** die Messeinrichtung (1) ein Funkübertragungsmodul aufweist, mit dem eine drahtlose Kommunikation stattfinden kann.

11. Messeinrichtung (1) nach einem der vorstehenden Ansprüche, **dadurch gekennzeichnet, dass** in den Hohlkörper (3) eine Ausnehmung eingebracht ist, in die eine an die Ausnehmung angepasste und auf einer Leiterplatte aufgebrachten Antennenvorrichtung eingepasst ist, wobei die Antennenvorrichtung von einer die Ausnehmung abdichtenden Hülse umfasst ist.

12. Messeinrichtung (1) nach einem der vorstehenden Ansprüche, **dadurch gekennzeichnet, dass** die Messeinrichtung (1) eine Unwuchtaufnahme (28) aufweist, mit welcher ein Ausgleichsmassenelement an dem Verformungskörper (3) festgelegt werden kann.

13. Messeinrichtung (1) nach Anspruch 12, **dadurch gekennzeichnet, dass** an einem Generatorgewicht (30) ein dauermagnetbehafteter Rotor (32) festgelegt ist, wobei das Generatorgewicht (30) und der dauermagnetbehaftete Rotor (32) innerhalb der Messeinrichtung (1) mittels Wälzlager (29) gelagert sind, sodass eine Rotationsbewegung der Messeinrichtung (1) um den in Wälzlagern (29) gelagerten dauermagnetbehafteten Rotor (32) eine elektrische Spannung in mindestens einer an der drehbaren Messeinrichtung (1) festgelegten Spulenwicklung erzeugen kann.

14. Messeinrichtung (1) nach einem der vorstehenden Ansprüche, **dadurch gekennzeichnet, dass** die Messeinrichtung (1) mindestens eine inertiale Messeinheit aufweist, die Drehraten- und/oder Beschleunigungsmesswerte erfassen kann.

## Claims

1. Measuring apparatus (1) for detecting mechanical stress on a hollow body (3) comprising a cylindrical interior portion (2), wherein the measuring apparatus (1) comprises a deformation body (4) that can be fixed in a force-transmitting manner in the cylindrical interior portion (2) and comprises a deformation region (13) and a sensor apparatus (15), which is fixed in the deformation region (13) and can detect mechanical stress transmitted to the deformation body (4) due to the mechanical stress on the hollow body (3) and thereby forced deformation of the deformation region (13) of the deformation body (4), wherein one elastically deformable press-in ring element (6) each is arranged at two opposite ends (5) of the deformation body (4) and the press-in ring element (6) has a ring element thickness (11) at least in some regions that is so low that the press-in ring element (6) adapts to an inner wall (7) of the hollow body (3) and is pressed in a force-fitting manner against the inner wall (7), such that mechanical stress on the hollow body (3) is transmitted via the press-in ring elements (6) to the deformation body (4) and causes a deformation of the deformation region (13) of the deformation body (4) that can be detected by the sensor apparatus (15), wherein a diameter of the deformation region (13) is less than a ring element diameter (8) of the press-in ring elements (6),
**characterised in that**
the deformation region (13) of the deformation body (4) consists of deformation webs (12) that connect the two press-in ring elements (6) and to which the sensor apparatus (15) is fixed.

2. Measuring apparatus (1) according to claim 1, **characterised in that** the low ring element thickness (11) of the press-in ring elements (6) is predetermined in a range of 3% to 25% relative to a relevant ring element diameter (8) of the press-in ring elements (6).

3. Measuring apparatus (1) according to claim 1 or claim 2, **characterised in that** the press-in ring elements (6) consist of a material that allows plastic deformation when deformation is forced beyond an elastic limit.

4. Measuring apparatus (1) according to any of the preceding claims, **characterised in that** the end (5) of the deformation body (4) lying in the pressing-in direction (23) comprises at least one contact surface (40) projecting radially inwards relative to a longitudinal axis (39) of the deformation body (4), such that the measuring device (1) can be pressed into the interior portion (2) in the pressing-in direction (23) by a press-in tool bearing against the at least one projecting contact surface (40).

5. Measuring apparatus (1) according to any of the preceding claims, **characterised in that** the deformation webs (12) connecting the two press-in ring elements (6) are tapered at least in portions along a relevant longitudinal axis of the deformation webs (12).

6. Measuring apparatus (1) according to any of the preceding claims, **characterised in that** at least one circumferential edge of each of the two press-in ring elements (6) comprises a press-in chamfer (24), such that the deformation body (4) can be introduced into the cylindrical interior (2) of the hollow body (3) with the press-in chamfer (24) of the press-in ring elements (6) in front.

7. Measuring apparatus (1) according to any of the preceding claims, **characterised in that** a centring ring element (22) having a smaller diameter than the ring element diameter (8) is fixed to at least one end face (5) of the deformation body (4), such that the centring ring element (22) can be introduced more easily into the cylindrical interior (2) of the hollow body (3) and provides advantageous positioning and alignment of the press-in ring element (6) that is subsequently pressed into the cylindrical interior (2).

8. Measuring apparatus (1) according to any of the preceding claims, **characterised in that** the sensor apparatus (15) comprises strain gauges (14), wherein the strain gauges (14) are fixed in the deformation region (13) of the deformation body (3) and, where applicable, to the deformation webs (12).

9. Measuring apparatus (1) according to any of the preceding claims, **characterised in that** the measuring apparatus (1) comprises an electronic processing apparatus (17), which prepares and processes measurement signals from the sensor apparatus (15).

10. Measuring apparatus (1) according to any of the preceding claims, **characterised in that** the measuring apparatus (1) comprises a radio transmission module with which wireless communication can take place.

11. Measuring apparatus (1) according to any of the preceding claims, **characterised in that** a recess is made in the hollow body (3), into which recess an antenna device adapted to the recess and mounted on a printed circuit board is fitted, wherein the antenna device is enclosed by a sleeve sealing the recess.

12. Measuring apparatus (1) according to any of the preceding claims, **characterised in that** the measuring apparatus (1) has an imbalance receptacle (28), by means of which a compensating mass element can be fixed to the deformation body (3).

13. Measuring apparatus (1) according to claim 12, **characterised in that** a permanent-magnet rotor (32) is fixed to a generator weight (30), wherein the generator weight (30) and the permanent-magnet rotor (32) are mounted inside the measuring apparatus (1) by means of rolling bearings (29), such that a rotational movement of the measuring apparatus (1) about the permanent-magnet rotor (32) mounted in rolling bearings (29) can generate an electrical voltage in at least one coil winding fixed to the rotatable measuring apparatus (1).

14. Measuring apparatus (1) according to any of the preceding claims, **characterised in that** the measuring apparatus (1) comprises at least one inertial measuring unit that can record rotation rate and/or acceleration measurement values.

## Revendications

1. Appareil de mesure (1) pour la détection d'une sollicitation mécanique d'un corps creux (3) avec une section d'espace intérieur (2) de forme cylindrique, l'appareil de mesure (1) présentant un corps de déformation (4) avec une zone de déformation (13) pouvant être fixé dans la section d'espace intérieur (2) de forme cylindrique en transmettant la force, et un appareil de capteur (15), qui est fixé dans la zone de déformation (13) et qui peut détecter une sollicitation mécanique transmise au corps de déformation (4) en raison de la sollicitation mécanique du corps creux (3) et une déformation ainsi forcée de la zone de déformation (13) du corps de déformation (4), un élément annulaire d'insertion (6) déformable élastiquement étant agencé respectivement à deux extrémités opposées (5) du corps de déformation (4) et l'élément annulaire d'insertion (6) présentant au moins par sections une épaisseur d'élément annulaire (11) si faible que l'élément annulaire d'insertion (6) s'adapte à une paroi intérieure (7) du corps creux (3) et est pressé par adhérence contre la paroi intérieure (7), de telle sorte qu'une sollicitation mécanique du corps creux (3) est transmise au corps de déformation (4) par l'intermédiaire des éléments annulaires d'insertion (6) et provoque une déformation de la zone de déformation (13) du corps de déformation (4) pouvant être détectée avec l'appareil de capteur (15), un diamètre de la zone de déformation (13) étant inférieur à un diamètre d'élément annulaire (8) des éléments annulaires d'insertion (6),
**caractérisé en ce que**
la zone de déformation (13) du corps de déformation (4) est constituée d'entretoises de déformation (12) reliant les deux éléments annulaires d'insertion (6), sur lesquelles est fixé l'appareil de capteur (15).

2. Appareil de mesure (1) selon la revendication 1, **caractérisé en ce que** la faible épaisseur d'élément annulaire (11) des éléments annulaires d'insertion (6) est prédéfinie dans une plage de 3 % à 25 % par rapport à un diamètre d'élément annulaire respectif (8) des éléments annulaires d'insertion (6).

3. Appareil de mesure (1) selon la revendication 1 ou la revendication 2, **caractérisé en ce que** les éléments annulaires d'insertion (6) sont constitués d'un matériau qui autorise une déformation plastique en cas de déformation forcée au-delà d'une limite d'élasticité.

4. Appareil de mesure (1) selon l'une quelconque des revendications précédentes, **caractérisé en ce que** l'extrémité (5) du corps de déformation (4) située dans la direction d'insertion (23) présente au moins une surface d'appui (40) faisant saillie radialement vers l'intérieur par rapport à un axe longitudinal (39) du corps de déformation (4), de telle sorte qu'avec un outil d'insertion appliqué contre l'au moins une surface d'appui (40) en saillie, le dispositif de mesure (1) peut être inséré dans la direction d'insertion (23) dans la section d'espace intérieur (2).

5. Appareil de mesure (1) selon l'une quelconque des revendications précédentes, **caractérisé en ce que** les entretoises de déformation (12) reliant les deux éléments annulaires d'insertion (6) sont rétrécies au moins par sections le long d'un axe longitudinal respectif des entretoises de déformation (12).

6. Appareil de mesure (1) selon l'une quelconque des revendications précédentes, **caractérisé en ce qu'**au moins un bord périphérique de chacun des deux éléments annulaires d'insertion (6) présente un chanfrein d'insertion (24), de telle sorte que le corps de déformation (4) peut être introduit dans l'espace intérieur de forme cylindrique (2) du corps creux (3) avec le chanfrein d'insertion (24) des éléments annulaires d'insertion (6) en avant.

7. Appareil de mesure (1) selon l'une quelconque des revendications précédentes, **caractérisé en ce qu'**un élément annulaire de centrage (22) d'un diamètre inférieur au diamètre d'élément annulaire (8) est fixé à au moins une extrémité frontale (5) du corps de déformation (4), de telle sorte que l'élément annulaire de centrage (22) peut être introduit plus facilement dans l'espace intérieur (2) de forme cylindrique du corps creux (3) et détermine un positionnement et une orientation avantageux de l'élément annulaire d'insertion (6) enfoncé ensuite dans l'espace intérieur (2) de forme cylindrique.

8. Appareil de mesure (1) selon l'une quelconque des revendications précédentes, **caractérisé en ce que** l'appareil de capteur (15) comprend des jauges de contrainte (14), les jauges de contrainte (14) étant fixées dans la zone de déformation (13) du corps de déformation (3) et éventuellement sur les entretoises de déformation (12).

9. Appareil de mesure (1) selon l'une quelconque des revendications précédentes, **caractérisé en ce que** l'appareil de mesure (1) comprend un appareil de traitement électronique (17) qui prépare et traite les signaux de mesure de l'appareil de capteur (15).

10. Appareil de mesure (1) selon l'une quelconque des revendications précédentes, **caractérisé en ce que** l'appareil de mesure (1) présente un module de transmission radio avec lequel une communication sans fil peut avoir lieu.

11. Appareil de mesure (1) selon l'une quelconque des revendications précédentes, **caractérisé en ce qu'**un évidement est ménagé dans le corps creux (3), dans lequel est ajusté un dispositif d'antenne adapté à l'évidement et monté sur une carte de circuit imprimé, le dispositif d'antenne étant entouré d'un manchon fermant l'évidement de manière étanche.

12. Appareil de mesure (1) selon l'une quelconque des revendications précédentes, **caractérisé en ce que** l'appareil de mesure (1) présente un logement de balourd (28) avec lequel un élément de masse d'équilibrage peut être fixé sur le corps de déformation (3).

13. Appareil de mesure (1) selon la revendication 12, **caractérisé en ce qu'**un rotor (32) à aimant permanent est fixé à un poids de générateur (30), le poids de générateur (30) et le rotor (32) à aimant permanent étant montés à l'intérieur de l'appareil de mesure (1) au moyen de paliers à roulement (29), de telle sorte qu'un mouvement de rotation de l'appareil de mesure (1) autour du rotor à aimant permanent (32) monté dans des paliers à roulement (29) peut générer une tension électrique dans au moins un enroulement de bobine fixé à l'appareil de mesure rotatif (1).

14. Appareil de mesure (1) selon l'une quelconque des revendications précédentes, **caractérisé en ce que** l'appareil de mesure (1) présente au moins une unité de mesure inertielle qui peut enregistrer des valeurs de mesure de vitesse de rotation et/ou d'accélération.
